# FASCICULE DE BREVET EUROPEEN

(11) **EP 4 111 062 B1**
(45) Date de publication et mention de la délivrance du brevet: **20.09.2023**
(21) Numéro de dépôt: 21707696.7
(22) Date de dépôt: 26.02.2021
(51) Int. Cl.: F04D 19/02, F04D 21/00, F04D 29/54

(54) **COMPRESSEUR TRANSSONIQUE DE TURBOMACHINE**
TRANSONISCHER TURBOMASCHINENVERDICHTER
TRANSONIC TURBOMACHINE COMPRESSOR

(30) Priorité: 28.02.2020 BE 202005137
(43) Date de publication de la demande: 04.01.2023
(73) Titulaire: Safran Aero Boosters SA, 4041 Herstal (BE)
(72) Inventeur: PRINCIVALLE, Rémy, Henri, Pierre, 4684 Haccourt (BE)
(74) Mandataire: Lecomte & Partners
(86) Numéro de dépôt international: PCT/EP2021/054872
(87) Numéro de publication internationale: WO 2021/170819

(56) Documents cités:
- DE-B- 1 212 242
- US-A- 3 546 880
- US-A1- 2013 149 100

## Description

### Domaine

L'invention a trait à la conception d'un compresseur de turbomachine et en particulier la géométrie des aubages statoriques et rotoriques d'un compresseur transsonique.

### Art antérieur

Le document EP 2 669 475 A1 décrit une turbomachine axiale et se concentre en particulier sur une géométrie en S pour une aube subsonique, c'est-à-dire particulièrement adaptée à des vitesses de rotation du rotor de compresseur telles que la vitesse de l'aube soit en tout point en deçà de la vitesse du son.

Le document US 3 546 880 A décrit un autre exemple d'une turbomachine avec un compresseur transsonique.

Afin de diminuer le poids et l'encombrement d'une turbomachine, il est possible de rendre les compresseurs et en particulier le compresseur basse-pression plus compact en diminuant le nombre d'étages de compression qui le composent. Ceci nécessite néanmoins, afin d'obtenir un taux de compression équivalent avec moins d'étages, d'entraîner le rotor plus vite en rotation.

Lorsque les aubes rotoriques dépassent la vitesse du son, la géométrie divulguée dans le document EP 2 669 475 A1 n'est plus adaptée. En particulier, la vitesse relative du flux d'air à l'entrée des rotors devient supérieure à la vitesse du son et des phénomènes de blocage du débit et des pertes aérodynamiques par choc surviennent.

Ces phénomènes rétroagissent également vers l'amont : un rotor aval dont les aubes sont radialement positionnées plus près de l'axe de rotation et qui créerait un blocage en tête d'aubes, perturberait en rétroaction le fonctionnement en pied d'aubes du rotor amont.

Le compresseur de l'état de la technique n'est donc pas adapté à des vitesses transsoniques.

L'intérêt de la réduction du nombre d'étages de compression dans un tel compresseur est donc amoindri par la plage de valeur des vitesses utilisables qui n'est pas aussi élevée que désirée pour obtenir un bon rendement de compresseur.

### Résumé de l'invention

### Problème technique

L'invention a comme problème technique de proposer une conception de compresseur qui permette une plus large gamme de vitesse de rotation du rotor, en s'affranchissant des risques de blocage de débit à haute vitesse.

### Solution technique

L'invention a trait à un compresseur transsonique de turbomachine d'aéronef comprenant exactement deux ou exactement trois rangées annulaires d'aubes rotoriques et respectivement exactement une ou exactement deux rangée(s) annulaire(s) d'aubes statoriques intermédiaire(s), intercalée(s) entre deux rangées d'aubes rotoriques successives, compresseur dans lequel l'angle du flux d'air en sortie des aubes statoriques intermédiaires de l'unique rangée annulaire d'aubes statoriques ou d'au moins une des deux rangées annulaires d'aubes statoriques, notamment celle la plus amont, est en moyenne supérieur à 15° sur la hauteur de ces aubes et est supérieur à 15°, préférentiellement supérieur à 20° sur une portion radiale de ces aubes statoriques comprise entre 60% et 80% de la hauteur de ces aubes.

Par « transsonique », on entend un compresseur dont les aubes rotoriques ont une vitesse en nombre de mach voisine de 1.2 à 1.4 (en entrée du compresseur) et voisine de 1.4 à 1.7 au sein du compresseur.

Ainsi, en déviant le flux d'air en sortie des stators intermédiaires, il est possible de maîtriser la vitesse relative du flux à l'entrée du ou des rotors en aval du ou des stators intermédiaires et d'éviter ainsi les phénomènes de blocage.

La valeur de 20° est critique car en-deçà de cette valeur, la vitesse relative du fluide devient trop importante et le blocage est très probable.

L'invention peut également être définie au moyen des angles d'entrée et de sortie des aubes statoriques intermédiaires : Compresseur transsonique de turbomachine d'aéronef comprenant exactement deux ou exactement trois rangées annulaires d'aubes rotoriques et respectivement exactement une ou exactement deux rangée(s) annulaire(s) d'aubes statoriques intermédiaire(s), intercalée(s) entre deux rangées d'aubes rotoriques successives, compresseur dans lequel l'angle de sortie des aubes statoriques intermédiaires de l'unique rangée annulaire d'aubes statoriques ou d'au moins une des deux rangées annulaires d'aubes statoriques, notamment celle la plus amont, est en moyenne supérieur à 9° sur la hauteur (H) de ces aubes et est supérieur à 9°, préférentiellement supérieur à 14° sur une portion radiale de ces aubes statoriques comprise entre 60% et 80% de la hauteur de ces aubes.

Comme expliqué plus loin, en conditions nominales (vitesse en tête des aubes comprise entre 360 m/s et 420 m/s), l'écart entre l'angle de sortie des aubes 41 et la direction du flux peut être de l'ordre de 5 ou 6°.

Selon un mode avantageux de l'invention, le compresseur comprend une rangée annulaire d'aubes statoriques aval, en aval de la rangée annulaire d'aubes rotoriques la plus aval, la différence entre l'angle du flux d'air en entrée et l'angle du flux d'air en sortie de ces aubes étant de moins de 40° sur une portion radiale s'étendant de 10% à 90% de leur hauteur radiale, et de moins de 50° sur les portions radiales en-deçà de 10% et au-delà de 90% de leur hauteur radiale.

Cette cambrure limitée du stator le plus aval du compresseur permet un écoulement du flux bien maîtrisé vers le carter structural directement en aval du compresseur et donc également vers le compresseur haute-pression et évite le blocage en rétroaction vers le dernier rotor.

Selon un mode avantageux de l'invention, les deux ou trois rangées d'aubes rotoriques sont deux rangées d'aubes rotoriques comprenant une rangée d'aubes amont et une rangée d'aubes aval, la moyenne de la différence entre les angles du flux en entrée et en sortie sur toute la hauteur des aubes amont étant supérieure ou égale à 1.4 fois, préférentiellement supérieure ou égale à 1.5 fois, la moyenne de la différence entre les angles du flux en entrée et en sortie sur toute la hauteur des aubes aval.

La moyenne arithmétique des différences angulaires sur toute la hauteur de l'aube donne une image du chargement aérodynamique reçu par l'aube. Plus la différence est grande, plus le flux sera dévié. Ceci se traduit par une aube qui est cambrée et qui sera d'autant plus chargée que le flux est dévié, pour un même flux d'air entrant.

Ainsi, le premier rotor en amont sera celui qui est aérodynamiquement le plus chargé. Cela permet aux rotors suivants d'être moins cambrés et moins chargés aérodynamiquement et les risques de blocage sur les rotors suivants sont donc amoindris, tout en garantissant un taux de compression nominal pour l'ensemble du compresseur. Le risque de blocage sur le premier rotor n'est pas gênant car il n'y a pas de rotor plus en amont que l'on empêcherait de travailler sur toute sa hauteur.

Selon un mode avantageux de l'invention, les deux ou trois rangées d'aubes rotoriques sont trois rangées d'aubes rotoriques comprenant une rangée d'aubes amont et une rangée d'aubes intermédiaires, la moyenne de la différence entre les angles du flux en entrée et en sortie sur toute la hauteur des aubes amont étant supérieure ou égale à 1.2 fois la moyenne de la différence entre les angles du flux en entrée et en sortie sur toute la hauteur des aubes intermédiaires. Les trois rangées comprennent en outre une rangée d'aubes aval, et optionnellement la moyenne de la différence entre les angles du flux en entrée et en sortie sur toute la hauteur des aubes amont étant supérieure ou égale à 1.4 fois la moyenne de la différence entre les angles du flux en entrée et en sortie sur toute la hauteur des aubes aval. Ainsi, de la même manière que pour le compresseur à deux rangées rotoriques évoqué ci-dessus, les aubes rotoriques aval sont moins sollicitées et sont moins susceptibles de générer un blocage aérodynamique.

Selon un mode avantageux de l'invention, la vitesse du flux relative au rotor qu'il rencontre en sortie des rangées statoriques intermédiaires est inférieure ou égale à un nombre de Mach de 0.9 sur une portion radiale des aubes rotoriques s'étendant sur les 40% radialement internes des aubes, et inférieure ou égale à un nombre de Mach de 1 sur une portion radiale s'étendant sur les 80% radialement internes, et inférieure ou égale à un nombre de Mach de 1.05 sur une portion radiale s'étendant sur les 20% radialement externes de ces aubes.

Selon un mode avantageux de l'invention, la direction du flux en sortie des rangées rotoriques est inclinée de plus de 40°, préférentiellement est inclinée de 45° à 50° en moyenne sur la hauteur des aubes, par rapport à l'axe de rotation des aubes.

Selon un mode avantageux de l'invention, la vitesse en sortie des aubes rotoriques les plus amont est inférieure à un nombre de Mach de 0.8.

Selon un mode avantageux de l'invention, les deux ou trois rangées d'aubes rotoriques comprennent une rangée la plus amont et une rangée la plus aval, et la variation d'enthalpie entre la sortie et l'entrée des aubes de la rangée la plus amont est au moins 1.4 supérieur à la variation d'enthalpie entre la sortie et l'entrée des aubes de la rangée la plus aval.

L'invention a également pour objet une turbomachine comprenant un compresseur basse-pression, un compresseur haute-pression, un carter structural en amont du compresseur basse-pression et un carter structural intermédiaire entre le compresseur basse-pression et le compresseur haute-pression, les carters structuraux délimitant une veine d'air en forme de col de cygne, caractérisée en ce que le compresseur basse-pression est conforme à l'un des modes de réalisation évoqués ci-dessus et est agencé directement en aval du carter amont et directement en amont du carter intermédiaire.

La turbomachine peut comprendre une soufflante ainsi qu'un réducteur agencé entre l'un ou l'autre des compresseurs et la soufflante.

Par « directement », on entend qu'il n'y a pas de rangée annulaire d'aube (rotorique ou statorique) entre les carters et le compresseur tel qu'il est défini ci-dessus.

L'invention a également pour objet une utilisation du compresseur ou de la turbomachine exposé(e) ci-dessus, dans lequel/laquelle les aubes rotoriques sont entraînées en rotation à une vitesse telle que leurs extrémités radialement externes se déplacent à une vitesse comprise entre 360 m/s et 420 m/s.

Selon un mode avantageux de l'invention, la vitesse des aubes rotoriques est supérieure à 340 m/s sur une portion radiale externe s'étendant sur au moins 30% de la hauteur des aubes rotoriques.

Selon un mode avantageux de l'invention, la direction de l'écoulement directement en aval des aubes statoriques intermédiaires est inclinée par rapport à l'axe de rotation des aubes rotoriques d'un angle moyen sur la hauteur de l'aube d'au moins 15° et d'au moins 20° sur une portion radiale des aubes statoriques comprise entre 60% et 80% de la hauteur des aubes.

Selon un mode avantageux de l'invention, la vitesse du flux relative au rotor qu'il rencontre en sortie des rangées statoriques intermédiaires est inférieure ou égale à un nombre de Mach de 0.9 sur une portion radiale des aubes s'étendant sur les 40% radialement internes des aubes, et inférieure ou égale à un nombre de Mach de 1 sur une portion radiale s'étendant sur les 80% radialement internes des aubes, et inférieure ou égale à un nombre de Mach de 1.05 sur une portion radiale s'étendant sur les 20% radialement externes des aubes.

Selon un mode avantageux de l'invention, les deux ou trois rangées d'aubes rotoriques comprennent une rangée la plus amont et une rangée la plus aval, et le chargement sur la rangée la plus amont est au moins 1.4 supérieur au chargement appliqué sur la rangée la plus aval.

Le « chargement » est l'accroissement de l'enthalpie ramenée au carré de la vitesse de rotation. L'accroissement de l'enthalpie est mesuré par l'accroissement de température entre l'entrée et la sortie de l'aube. Cet accroissement est lié à la déviation du flux d'air comme expliqué plus loin

### Avantages de l'invention

L'invention est particulièrement avantageuse en ce qu'elle permet un fonctionnement d'un compresseur muni de seulement deux ou trois étages de compression à haute vitesse en contrôlant les vitesses relatives à l'approche des rotors en aval des stators intermédiaires du compresseur.

### Description des dessins

La figure 1 décrit schématiquement une turbomachine ;
La figure 2 illustre un étage rotor/stator avec des diagrammes de vitesse ;
La figure 3 montre une aube rotorique en vue isométrique ;
La figure 4 décrit une aube statorique en vue isométrique ;
La figure 5 montre exemple de compresseur à deux étages ;
La figure 6 illustre un exemple de compresseur à trois étages.

### Description d'un mode de réalisation

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

Les figures ne sont pas représentées à l'échelle. En particulier, les épaisseurs sont agrandies pour faciliter la lecture des figures.

Le terme « hauteur » se rapporte à une dimension mesurée selon la direction de plus grande dimension des aubes, qui peut être radiale ou légèrement inclinée par rapport à la direction radiale, du fait de la pente de la veine d'air.

La corde est le segment de droite reliant le bord d'attaque au bord de fuite dans un plan perpendiculaire à un rayon. La cambrure est la courbe médiane reliant le bord d'attaque au bord de fuite à équidistance de l'intrados et de l'extrados.

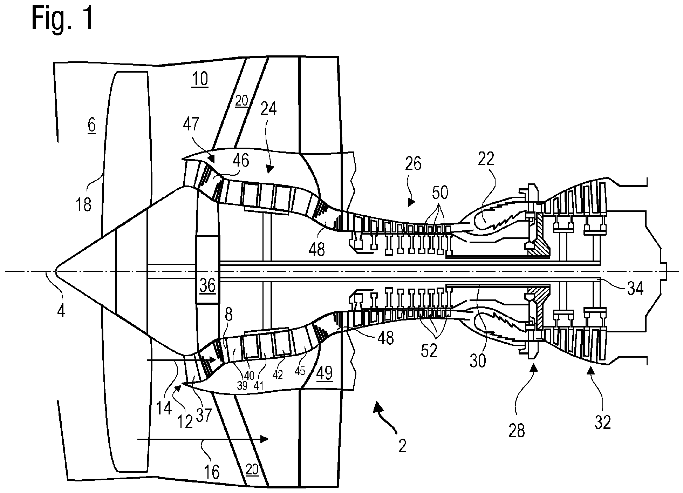

La figure 1 représente de manière simplifiée une turbomachine axiale. Il s'agit ici d'un turboréacteur 2 double-flux.

La turbomachine 2 présente un axe de rotation 4. Une entrée annulaire 6 se divise en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie de la turbomachine 2. Les flux primaire 14 et secondaire 16 sont des flux annulaires coaxiaux et emmanchés l'un dans l'autre. Ils sont canalisés par les parois internes et externes de la turbomachine 2.

Le flux secondaire 16 est accéléré par une soufflante 18 disposée en entrée 6, afin de générer une poussée pour le vol d'un aéronef. Des pales de redressement 20 peuvent être disposées dans la veine secondaire 10 et être configurées afin d'augmenter la composante axiale de la vitesse du flux secondaire. La soufflante 18 est disposée en amont de la veine primaire 8 et de la veine secondaire 10.

La turbomachine 2 comprend une zone de compression formée par deux compresseurs 24, 26, une chambre de combustion 22 et une zone de détente 28, 32. Les compresseurs 24, 26 sont composés d'un compresseur basse-pression 24 et d'un compresseur haute-pression 26.

Le compresseur haute-pression 26 est placé en entrée de la chambre de combustion 22.

En aval de la chambre de combustion 22, la turbomachine 2 peut présenter une turbine haute-pression 28 couplée à un arbre haute-pression 30, puis une turbine basse-pression 32 couplée à un arbre basse-pression 34. Ce dernier peut être indépendant en rotation de l'arbre haute-pression 30. Ces turbines 28, 32 forment la zone de détente du flux primaire 14.

En fonctionnement, la puissance mécanique reçue par les turbines 28, 32 est transmise aux arbres 30, 34 qui mettent en mouvement les compresseurs 24, 26. Ces derniers comportent plusieurs rangées d'aubes de rotor associées à des rangées d'aubes de stator. Les aubes de rotor sont solidaires ou cinématiquement entraînées par les arbres 30, 34 autour de l'axe de rotation 4 pour générer un débit d'air et comprimer progressivement ce dernier jusqu'à l'entrée de la chambre de combustion 22.

La turbomachine comprend des moyens de démultiplication, tel un réducteur 36 qui entraîne la soufflante 18 à une vitesse de rotation plus faible que celle des aubes rotoriques du compresseur basse-pression. Ainsi, deux turbines suffisent pour entraîner les compresseurs et la soufflante à trois vitesses de rotation respectives différentes.

En particulier, le réducteur 36 permet que le compresseur basse-pression 24 soit compact (peu d'étages de compression) car il peut tourner à des vitesses importantes et notamment transsoniques alors que la soufflante 18 tourne à des vitesses subsoniques.

Dans l'illustration de la figure 1, le compresseur basse-pression 24 comprend deux rangées annulaires d'aubes rotoriques 40, 42 solidaires de l'arbre 34. Le compresseur peut alternativement comprendre trois rangées annulaires d'aubes rotoriques.

Le compresseur 24 comprend des rangées annulaires d'aubes statoriques et notamment une rangée d'entrée 39, une rangée statorique intermédiaire 41 axialement intercalée entre deux rangées rotoriques et une rangée statorique aval 45. Alternativement, lorsque le compresseur comprend trois rangées d'aubes rotoriques, une deuxième rangée statorique intermédiaire est prévue entre la deuxième et la troisième rangée rotorique.

Les aubes 39 peuvent être à calage variable (VSV pour « variable stator vane »). Dans la présente demande, on considérera les aubes 39 dans la position angulaire qu'elles prennent en vol (« cruise »).

Le compresseur 24 est disposé directement en aval d'un support de carter 47 et directement en amont d'un autre support de carter 49.

Ces carters 47, 49 peuvent comprendre des manches annulaires formant des tronçons de la veine primaire 8. Ils peuvent présenter des bras de support (dits « struts » en anglais) 46, 48 traversant radialement la veine 8. Les manches annulaires peuvent présenter des profils en col de cygne. Elles peuvent marquer des réductions importantes de diamètre de la veine primaire 8.

Le carter amont 47 et ses bras 46 peuvent supporter le réducteur 36.

En amont des bras 46 est prévue une rangée d'aubes statoriques 37 à proximité du bec 12. En aval des bras 48 figure le compresseur haute-pression 26 muni d'aubes statoriques 50 et rotoriques 52. Ces dernières étant entraînées en rotation au moyen de l'arbre 30.

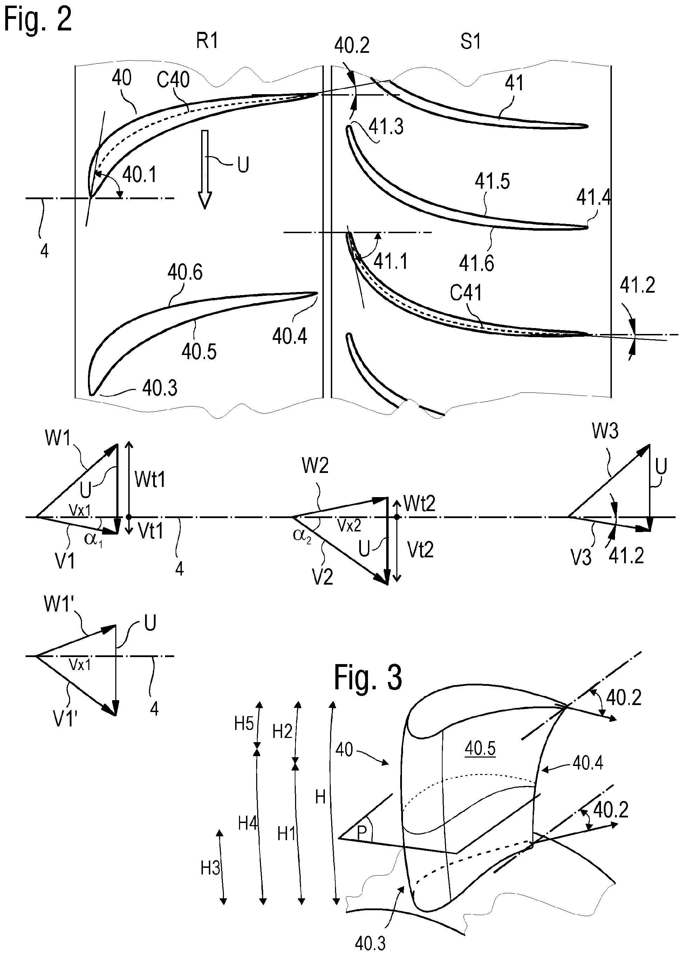

La figure 2 illustre quelques paramètres aidant à définir la géométrie d'un étage de compression formé d'un rotor R1 et d'un stator S1, vu dans un plan parallèle à l'axe 4 et perpendiculaire à un de ces rayons, à une distance r de l'axe 4. Pour être exact, la figure 2 est une représentation d'une projection développée sur un plan (P sur la figure 3) de quelques aubes adjacentes. Les aubes rotoriques 40 accélèrent l'écoulement du fluide grâce à l'énergie transmise par l'arbre de transmission 34. L'étage statorique 41 « transforme » l'énergie cinétique en pression grâce à la forme des aubes statoriques.

Les aubes tournent à une vitesse de rotation w autour de l'axe 4, ce qui signifie qu'un point de l'aube de coordonnée radiale r aura pour vitesse U=rω. Dans les exemples illustrés, toutes les aubes rotoriques tournent à la même vitesse ω et la vitesse dans le plan de coupe est donc U pour toutes les aubes rotoriques.

La cambrure des aubes 40, 41 est notée C40 et C41 et est représentée en traits interrompus.

Le diagramme de vecteurs à gauche des aubes rotoriques 40 correspond à l'état du fluide à l'entrée de l'étage de compression. Le fluide se présente avec une vitesse absolue V1, selon une orientation qui dépend des éléments de la turbomachine précédent le compresseur. Le vecteur vitesse relative W1 d'entrée du fluide dans le rotor se déduit en soustrayant les vecteurs U à V1.

Par comparaison, un diagramme représentant une autre vitesse d'entrée absolue V1' est représenté. En comparaison de V1, V1' est plus incliné par rapport à l'axe 4 mais les deux vitesses V1 et V1' ont la même composante axiale Vx1. Il en découle, pour une même vitesse de rotation U, une vitesse relative W1 ' dont la valeur absolue est plus faible que W1.

Ainsi, pour une même valeur de composante axiale de la vitesse d'entrée, si celle-ci est plus ou moins inclinée, la vitesse relative de l'air par rapport au rotor est différente.

En sortie du rotor R1, le fluide a une vitesse relative W2 dont l'orientation dépend de la géométrie des aubes. En ajoutant U à W2, on obtient la vitesse de sortie absolue V2 qui est plus grande en valeur que V1.

Ensuite, les aubes statoriques 41 dévient et décélèrent le fluide, cette décélération se répercutant en une augmentation de pression. L'orientation de la vitesse V3 dépend entre autres de la géométrie des aubes statoriques.

La géométrie des aubes peut être décrite en partie par leur angle d'entrée et leur angle de sortie.

L'« angle d'entrée » d'une aube est l'angle formé dans un plan parallèle à l'axe du compresseur et perpendiculaire à un rayon, entre la tangente à la ligne de cambrure et l'axe du compresseur, au niveau du bord d'attaque.

L'« angle de sortie » d'une aube est l'angle formé dans un plan parallèle à l'axe du compresseur et perpendiculaire à un rayon, entre la tangente à la ligne de cambrure et l'axe du compresseur, au niveau du bord de fuite de l'aube.

Ainsi, la vitesse relative W2 est sensiblement orientée selon l'angle de sortie des aubes rotoriques 40 et la vitesse V3 est sensiblement orientée selon l'angle de sortie des aubes statoriques 41. En conditions nominales (vitesse en tête des aubes comprise entre 360 m/s et 420 m/s), l'écart entre l'angle de sortie des aubes 41 et la direction du flux V3 peut être de l'ordre de 5 ou 6°. L'invention a été définie pour des angles de flux supérieurs en moyenne à 15° et supérieurs à 15° entre 60 et 80% de la hauteur de l'aube. Elle peut également être définie par des angles de sortie des aubes statoriques qui en moyenne valent plus de 9° et qui sur la plage 60-80% valent plus de 9°, préférentiellement plus de 14°.

L'accroissement d'enthalpie que l'on peut noter ΔH dans le rotor R1 vaut U x (Vt2-Vt1) d'après l'équation d'Euler, où U est la vitesse de rotation (en m/s) du rotor, Vt1 et Vt2 les vitesses tangentielles du flux d'air respectivement en entrée et en sortie du rotor, dans le repère fixe du moteur.

Dans le repère relatif du rotor, la vitesse tangentielle de flux (resp. en entrée et sortie) vaut Wt1 = Vt1 - U et Wt2 = Vt2 - U.

Si la vitesse axiale du flux d'air vaut respectivement Vx1 et Vx2 en entrée et sortie du rotor, les angles du flux d'air relativement au rotor valent α1 = atan(Wt1/Vx1) et α2 = atan(Wt2/Vx2), soit valent α1 = atan((Vt1-U)/Vx1) et alpha2 = atan((Vt2-U)/Vx2).

Ainsi, l'accroissement d'enthalpie qui est proportionnel à la différence de l'écart de vitesse tangentielle entre l'entrée et la sortie du rotor (Vt2-Vt1) se retrouve de manière non proportionnelle, mais corrélée, dans la déviation du rotor α2- α1 qui vaut effectivement atan((Vt2-U)/Vx2)- atan((Vt1-U)/Vx1).

On notera 4x.1 l'angle du flux d'air en entrée et 4x.2 l'angle du flux d'air en sortie des différentes aubes (où x = 1, 2, 3, 4 ou 5).

Il est important de noter que les angles 4x.1, 4x.2 varient sur la hauteur des aubes.

La différence entre l'angle d'entrée et l'angle de sortie du flux peut être notée Δ4x=|4x.1-4x.2|. Cette différence caractérise aussi la cambrure d'une aube. Par exemple, Δ40=|40.1-40.2|. Si les angles sont très différents, l'aube est très cambrée. Pour une aube rotorique, cela se traduit par un chargement aérodynamique important. Pour une aube statorique, cela se traduit par une déviation du flux importante (déviation = différence entre l'angle du flux en entrée et l'angle du flux en sortie des aubes). Comme les angles 4x.1 et 4x.2 varient, on retiendra une moyenne arithmétique sur toute la hauteur de l'aube, que l'on notera <Δ4x>.

Le chargement est la variation d'enthalpie divisée par la vitesse de rotation au carré. Ainsi, une aube très cambrée permettra une plus grande compression. La limite de cambrure étant généralement régie par la tenue mécanique et dans notre cas par la volonté de ne pas créer de blocage à vitesse supersonique.

Selon le même principe qu'évoqué ci-dessus pour V1', la géométrie de l'aube influence l'angle de sortie du flux 41.2 influence définissant la direction de la vitesse V3 et donc la valeur de la vitesse relative du flux W3 par rapport au rotor en aval de S1 (non représenté). Une grande valeur de l'angle 41.2 implique donc une plus petite valeur de W3.

Sur la figure 2 sont également matérialisés les bords d'attaque 40.3, 41.3, les bords de fuite 40.4, 41.4, les intrados 40.5, 41.5 et les extrados 40.6, 41.6 des aubes 40, 41.

La figure 3 illustre une vue isométrique d'une aube rotorique 40. On y voit notamment une position possible du plan P dans lequel est effectuée la coupe de la figure 2. Cette figure matérialise également la hauteur H de l'aube et différentes portions de cette hauteur : H1 s'étend sur 70% de la hauteur de l'aube, côté interne ; H2 s'étend sur 30% de l'aube, côté externe ; H3 correspond au 40% internes ; H4 au 80% internes et H5 au 20% externes.

La figure 3 met également en évidence les variations de l'angle 40.2 du flux d'air entre une position radiale au pied de l'aube et une position radiale en tête de l'aube. Il en va de même pour tous les angles 4x.1 ou 4x.2 qui peuvent varier du pied de l'aube vers la tête de l'aube.

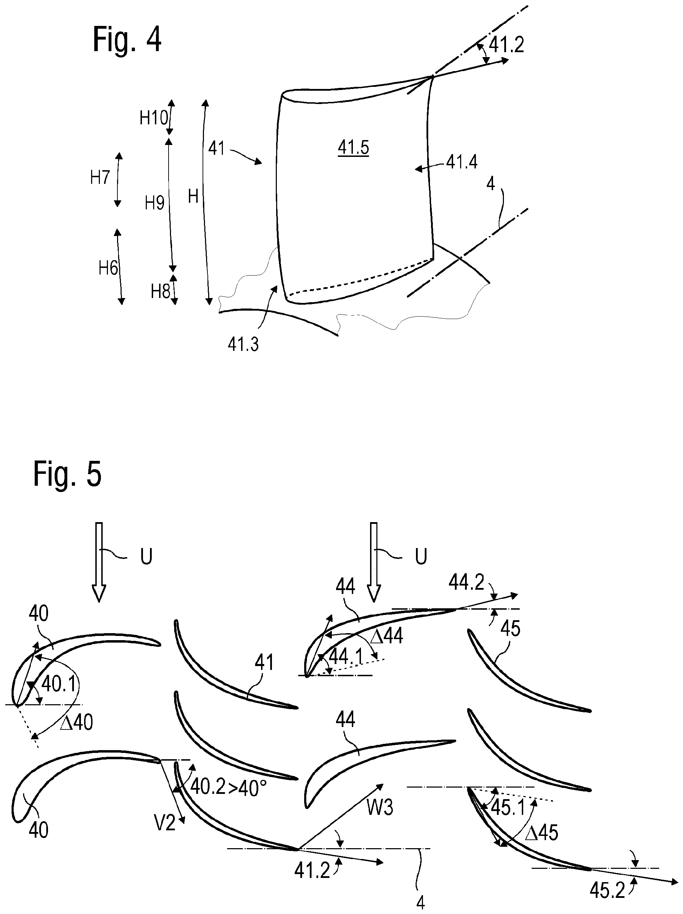

La figure 4 illustre une vue isométrique d'une aube statorique 41. Cette figure matérialise la hauteur H de l'aube statorique (sensiblement égale à celle de l'aube rotorique la précédent) et différentes portions de cette hauteur : H6 s'étend sur 40% de la hauteur de l'aube, côté interne ; H7 s'étend entre 60% et 80% de l'aube, côté externe ; H8 correspond au 10% internes ; H9 s'étend entre 10% interne et 10% externe ; et H10 correspond au 10% externes.

La figure 5 illustre un exemple dans lequel le compresseur comprend exactement deux rangées d'aubes rotoriques 40, 44 et deux rangées d'aubes statoriques 41, 45.

Selon l'invention, l'angle du flux 41.2 est supérieur à 15° en moyenne sur la hauteur H des aubes 41 et est supérieur à 20° sur la portion H7 radialement comprise entre 60% et 80% de la hauteur de l'aube 41. Il est entendu que la géométrie de l'aube est progressive et ne présente pas de coin ou de points anguleux, des rayons de raccordement étant prévus le cas échéant entre les portions supérieures à 15° et les portions supérieures à 20°.

La figure 5 met également en évidence la direction de la vitesse V2 en sortie de l'aube 40 matérialisée par l'angle 40.2 qui est supérieur à 40°.

On y observe aussi les différences d'angles Δ40 et Δ44, dont le ratio Δ40/Δ44 est supérieur ou égal à 1.4. La déviation du flux Δ45 sur les aubes statoriques 45 est quant à elle inférieure à 50°.

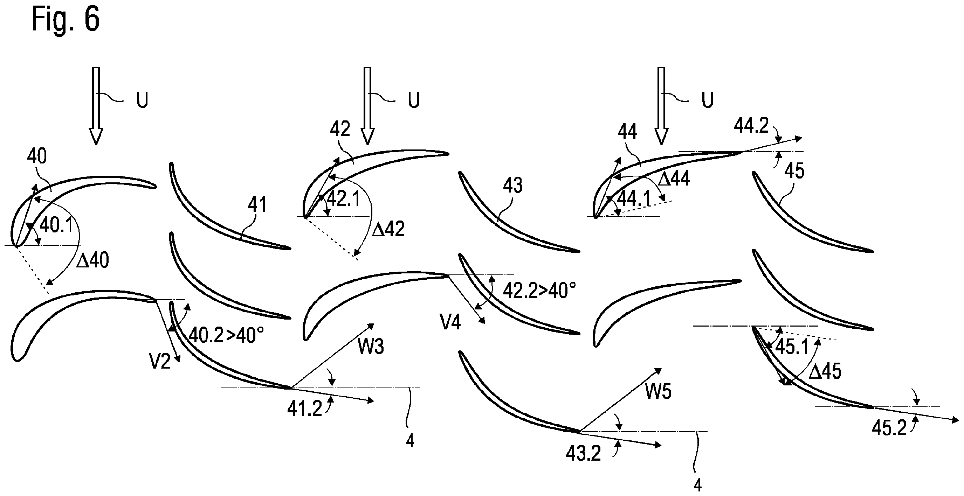

La figure 6 montre un mode de réalisation avec trois étages de compression. En comparaison de la figure 5, ce compresseur comprend une rangée rotorique 42 supplémentaire ainsi qu'une rangée d'aubes statoriques intermédiaires 43 supplémentaire.

Le ratio Δ40/Δ44 est supérieur ou égal à 1.4 et les ratios Δ40/Δ42 et Δ42/Δ44 sont supérieurs ou égal à 1.2.

L'angle 43.2 est supérieur à 15° en moyenne sur la hauteur H des aubes 43 et est supérieur à 15°, préférentiellement 20°, sur la portion (H7 sur la figure 4) radialement externe s'étendant sur de 60% à 80% de l'aube 43.

Il est à noter que dans la présente demande, les aubes rotoriques et statoriques sont présentées avec des hauteurs identiques H alors qu'en pratique des variations de hauteur et de position radiales des aubes peuvent exister.

Enfin, toutes les aubes rotoriques sont ici présentées comme tournant à la même vitesse ω. L'homme du métier saura appliquer l'enseignement de la présente demande aux cas où les rangées d'aubes rotoriques ont des vitesses différentes.

## Revendications

1. Compresseur transsonique (24) de turbomachine d'aéronef (2) comprenant exactement deux ou exactement trois rangées annulaires d'aubes rotoriques (40, 42, 44) et respectivement exactement une ou exactement deux rangée(s) annulaire(s) d'aubes statoriques intermédiaire(s) (41, 43), intercalée(s) entre deux rangées d'aubes rotoriques (40, 42, 44) successives, compresseur dans lequel lorsque les aubes rotoriques (40, 42, 44) sont entraînées à une vitesse de rotation (ω) telle que la vitesse (U) de l'extrémité radialement externe des aubes rotoriques (40, 42, 44) soit comprise entre 360 m/s et 420 m/s, l'angle du flux d'air en sortie (41.2, 43.2) des aubes statoriques intermédiaires (41, 43) de l'unique rangée annulaire d'aubes statoriques ou d'au moins une des deux rangées annulaires d'aubes statoriques, notamment celle la plus amont, est en moyenne supérieur à 15° sur la hauteur (H) de ces aubes (41, 43) et est supérieur à 15°, préférentiellement supérieur à 20° sur une portion (H7) radiale de ces aubes statoriques comprise entre 60% et 80% de la hauteur de ces aubes (41, 43).

2. Compresseur (24) selon la revendication 1, **caractérisé en ce qu'**il comprend une rangée annulaire d'aubes statoriques aval (45), en aval de la rangée annulaire d'aubes rotoriques (44) la plus aval, la différence (Δ45) entre l'angle du flux d'air en entrée (45.1) et l'angle du flux d'air en sortie (45.2) de ces aubes étant de moins de 40° sur une portion radiale (H9) s'étendant de 10% à 90% de leur hauteur radiale, et de moins de 50° sur les portions radiales (H8, H10) en-deçà de 10% et au-delà de 90% de leur hauteur radiale.

3. Compresseur (24) selon l'une des revendications 1 ou 2, **caractérisé en ce que** les deux ou trois rangées d'aubes rotoriques (40, 42, 44) sont deux rangées d'aubes rotoriques (40, 44) comprenant une rangée d'aubes amont (40) et une rangée d'aubes aval (44), la moyenne (<Δ40>) de la différence (Δ40) entre les angles du flux en entrée (40.1) et en sortie (40.2) sur toute la hauteur (H) des aubes amont (40) étant supérieure ou égale à 1.4 fois, préférentiellement supérieure ou égale à 1.5 fois, la moyenne (<Δ44>) de la différence (<Δ44>) entre les angles du flux en entrée (44.1) et en sortie (44.2) sur toute la hauteur (H) des aubes aval (44).

4. Compresseur (24) selon l'une des revendications 1 ou 2, **caractérisé en ce que** les deux ou trois rangées d'aubes rotoriques (40, 42, 44) sont trois rangées d'aubes rotoriques (40, 42, 44) comprenant une rangée d'aubes amont (40) et une rangée d'aubes intermédiaires (42), la moyenne (<Δ40>) de la différence (Δ40) entre les angles du flux en entrée (40.1) et en sortie (40.2) sur toute la hauteur (H) des aubes amont (40) étant supérieure ou égale à 1.2 fois la moyenne (<Δ42>) de la différence (Δ42) entre les angles du flux en entrée (42.1) et en sortie (42.2) sur toute la hauteur (H) des aubes intermédiaires (42).

5. Compresseur (24) selon la revendication précédente, **caractérisé en ce que** les trois rangées (40, 42, 44) comprennent en outre une rangée d'aubes aval (44), la moyenne (<Δ42>) de la différence (<Δ42>) entre les angles du flux en entrée (42.1) et en sortie (42.2) sur toute la hauteur (H) des aubes amont (40) étant supérieure ou égale à 1.4 fois la moyenne (<Δ44>) de la différence (Δ44) entre les angles du flux en entrée (44.1) et en sortie (44.2) sur toute la hauteur (H) des aubes aval (44).

6. Compresseur (24) selon l'une des revendications 1 à 5, **caractérisé en ce que** la vitesse (W3, W5) du flux relative au rotor (42, 44) qu'il rencontre en sortie des rangées statoriques intermédiaires (41, 43) est inférieure ou égale à un nombre de Mach de 0.9 sur une portion radiale (H3) des aubes rotoriques (42, 44) s'étendant sur les 40% radialement internes des aubes (42, 44), et inférieure ou égale à un nombre de Mach de 1 sur une portion radiale (H4) s'étendant sur les 80% radialement internes des aubes (42, 44), et inférieure ou égale à un nombre de Mach de 1.05 sur une portion radiale (H5) s'étendant sur les 20% radialement externes de ces aubes (42, 44).

7. Compresseur (24) selon l'une des revendications 1 à 6, **caractérisé en ce que** la direction du flux en sortie des rangées rotoriques (40, 42, 44) est inclinée de plus de 40°, préférentiellement est inclinée de 45° à 50° en moyenne sur la hauteur (H) des aubes (40, 42, 44), par rapport à l'axe de rotation (4) des aubes (40, 42, 44).

8. Compresseur (24) selon l'une des revendications 1 à 7, **caractérisé en ce que** la vitesse (V2) en sortie des aubes rotoriques (40) les plus amont est inférieure à un nombre de Mach de 0.8.

9. Compresseur (24) selon l'une des revendications 1 à 8, **caractérisée en ce que** les deux ou trois rangées d'aubes rotoriques (40, 42, 44) comprennent une rangée la plus amont (40) et une rangée la plus aval (44), et la variation d'enthalpie entre la sortie et l'entrée des aubes de la rangée la plus amont (40) est au moins 1.4 supérieur à la variation d'enthalpie entre la sortie et l'entrée des aubes de la rangée la plus aval (44).

10. Turbomachine (2) comprenant un compresseur basse-pression (24), un compresseur haute-pression (26), un carter structural (47) en amont du compresseur basse-pression (24) et un carter structural intermédiaire (49) entre le compresseur basse-pression (24) et le compresseur haute-pression (26), les carters structuraux (47, 49) délimitant une veine d'air (8) en forme de col de cygne, **caractérisée en ce que** le compresseur basse-pression (24) est conforme à l'une quelconque des revendications précédentes et est agencé directement en aval du carter amont (47) et directement en amont du carter intermédiaire (49).

11. Turbomachine (2) selon la revendication 10, **caractérisé en ce qu'**elle comprend en outre une soufflante (18) ainsi qu'un réducteur (36) agencé entre l'un ou l'autre des compresseurs (24, 26) et la soufflante (18).

12. Utilisation d'un compresseur transsonique (24) selon l'une quelconque des revendications 1 à 9 ou d'une turbomachine (2) selon la revendication 10 ou 11, les aubes rotoriques (40, 42, 44) étant entraînées en rotation à une vitesse (ω) telle que leurs extrémités radialement externes se déplacent à une vitesse (U) comprise entre 360 m/s et 420 m/s, utilisation selon laquelle préférentiellement les deux ou trois rangées d'aubes rotoriques (40, 42, 44) comprennent une rangée la plus amont (40) et une rangée la plus aval (44), et le chargement sur la rangée la plus amont (40) est au moins 1.4 supérieur au chargement appliqué sur la rangée la plus aval (44).

## Patentansprüche

1. Ein transsonischer Verdichter (24) für ein Flugzeugturbinentriebwerk (2), der genau zwei oder genau drei ringförmige Reihen von Rotorschaufeln (40, 42, 44) und genau eine oder genau zwei ringförmige Reihen von Zwischenstatorschaufeln (41, 43) umfasst, die jeweils zwischen zwei Reihen von Rotorschaufeln (40, 42, 44) nacheinander angeordnet sind, wobei, wenn die Rotorschaufeln (40, 42, 44) mit einer solchen Drehgeschwindigkeit (w) angetrieben werden, dass die Geschwindigkeit (U) des radial äußeren Endes der Rotorschaufeln (40, 42, 44) zwischen 360 m/s und 420 m/s liegt, der Luftströmungswinkel am Auslass (41.2, 43.2) der mittleren Statorschaufeln (41, 43) der einzigen ringförmigen Reihe von Statorschaufeln oder mindestens einer der beiden ringförmigen Reihen von Statorschaufeln, insbesondere der vordersten, im Durchschnitt größer als 15° über die Höhe (H) dieser Schaufeln (41, 43) und größer als 15°, vorzugsweise größer als 20° über einen radialen Teil (H7) dieser Statorschaufeln von zwischen 60% und 80% der Höhe (H) dieser Schaufeln (41, 43) ist.

2. Verdichter (24) nach Anspruch 1, **dadurch gekennzeichnet, dass** er eine ringförmige Reihe von stromabwärts gelegenen Statorschaufeln (45) umfasst, die stromabwärts der am weitesten stromabwärts gelegenen ringförmigen Reihe von Rotorschaufeln (44) angeordnet sind, wobei die Differenz (Δ45) zwischen dem Winkel des Eintrittsluftstroms (45.1) und dem Winkel des Luftauslasses (45.2) in Bezug auf diese Schaufeln weniger als 40° auf einem radialen Abschnitt (H9), der sich zwischen 10% und 90% ihrer radialen Höhe erstreckt, und weniger als 50° auf radialen Abschnitten (H8, H10) unter 10% und über 90% ihrer radialen Höhe beträgt.

3. Verdichter (24) nach einem der Ansprüche 1 oder 2, **dadurch gekennzeichnet, dass** die zwei oder drei Reihen von Rotorschaufeln (40, 42, 44) zwei Reihen von Rotorschaufeln (40, 44) sind, die eine stromaufwärts gelegene Reihe von Schaufeln (40) und eine stromabwärts gelegene Reihe von Schaufeln (44) umfassen, wobei der Durchschnitt (<Δ40>) der Differenz (Δ40) zwischen den Winkeln des Einlassstroms (40.1) und dem Abfluss (40.2) über die gesamte Höhe (H) der stromaufwärts gelegenen Schaufeln (40) größer oder gleich dem 1,4-fachen, vorzugsweise größer oder gleich dem 1,5-fachen, des Durchschnitts (<Δ44>) der Differenz (<Δ44>) zwischen den Winkeln des Zuflusses (44.1) und des Abflusses (44.2) über die gesamte Höhe (H) der stromabwärts gelegenen Schaufeln (44) ist.

4. Verdichter (24) nach einem der Ansprüche 1 oder 2, **dadurch gekennzeichnet, dass** die zwei oder drei Reihen von Rotorschaufeln (40, 42, 44) drei Reihen von Rotorschaufeln (40, 42, 44) sind, die eine stromaufwärts gelegene Reihe von Schaufeln (40) und eine dazwischen liegende Reihe von Schaufeln (42) umfassen, wobei der Durchschnitt (<Δ40>) der Differenz (Δ40) zwischen den Winkeln für den Einlassstrom (40.1) und dem Auslass (40.2) über die gesamte Höhe (H) der stromaufwärts gelegenen Schaufeln (40) größer oder gleich dem 1,2-fachen des Durchschnitts (<Δ42>) der Differenz (Δ42) zwischen den Winkeln des Einlassstroms (44.1) und des Auslasses (44.2) über die gesamte Höhe (H) der Zwischenschaufeln (42) ist

5. Verdichter (24) nach dem vorhergehenden Anspruch, **dadurch gekennzeichnet, dass** die drei Reihen (40, 42, 44) außerdem eine Reihe von stromabwärts angeordneten Schaufeln (44) umfassen, wobei der Durchschnitt (<Δ42>) der Differenz (<Δ42>) zwischen den Winkeln des Einlassstroms (44. 1) und des Auslassstroms (44. 2) über die gesamte Höhe (H) der stromaufwärts gelegenen Schaufeln (40) größer oder gleich dem 1,4-fachen des Durchschnitts (<Δ44>) der Differenz (Δ44) zwischen dem Winkel des Einlasses (44.1) und des Auslasses (44.2) über die gesamte Höhe (H) der stromabwärts gelegenen Schaufeln (44) ist.

6. Verdichter (24) nach einem der Ansprüche 1 bis 5, **dadurch gekennzeichnet, dass** die Geschwindigkeit (W3, W5) der Strömung relativ zum Rotor (42, 44), auf die sie am Ausgang der Zwischenstatorreihen (41, 43) trifft, kleiner oder gleich 0,9 Mach auf einem radialen Teil (H3) der Rotorschaufeln (42, 44), der sich über 40% des radial inneren Teils der Schaufeln (42, 44) erstreckt, und weniger als oder gleich 1 Mach auf einem radialen Teil (H4), der sich über 80% des radial inneren Teils der Schaufeln (42, 44) erstreckt, und weniger als oder gleich 1,05 Mach auf einem radialen Teil (H5), der sich über 20% des radial äußeren Teils der Schaufeln (42, 44) erstreckt.

7. Verdichter (24) nach einem der Ansprüche 1 bis 6, **dadurch gekennzeichnet, dass** die Strömungsrichtung am Auslass der Rotorreihen (40, 42, 44) um mehr als 40°, vorzugsweise im Durchschnitt um 45° bis 50° entlang der Höhe (H) der Schaufeln (40, 42, 44), relativ zur Drehachse (4) der Schaufeln (40, 42, 44) geneigt ist.

8. Verdichter (24) nach einem der Ansprüche 1 bis 7, **dadurch gekennzeichnet, dass** die Geschwindigkeit (V2) am Austritt der stromaufwärts gelegenen Rotorschaufeln (40) weniger als 0,8 Mach beträgt.

9. Verdichter (24) nach einem der Ansprüche 1 bis 8, **dadurch gekennzeichnet, dass** die zwei oder drei Reihen von Rotorschaufeln (40, 42, 44) eine stromaufwärts gelegene Reihe (40) und eine stromabwärts gelegene Reihe (44) umfassen und die Enthalpieschwankung zwischen dem Ausgang und dem Eingang der stromaufwärts gelegenen Reihe von Schaufeln (40) mindestens 1,4 größer ist als die Enthalpieschwankung zwischen dem Ausgang und dem Eingang der stromabwärts gelegenen Reihe von Schaufeln (44).

10. Turbomaschine (2) mit einem Niederdruckverdichter (24), einem Hochdruckverdichter (26), einem Strukturgehäuse (47) stromaufwärts des Niederdruckverdichters (24) und einem Zwischenstrukturgehäuse (49) zwischen dem Niederdruckverdichter (24) und dem Hochdruckverdichter (26), wobei die Strukturgehäuse (47, 49) einen schwanenhalsförmigen Luftstrom (8) begrenzen, **dadurch gekennzeichnet, dass** der Niederdruckverdichter (24) einem der vorhergehenden Ansprüche entspricht und direkt stromabwärts des stromaufwärts gelegenen Gehäuses (47) und direkt stromaufwärts des Zwischengehäuses (49) angeordnet ist.

11. Turbomaschine (2) nach Anspruch 10, **dadurch gekennzeichnet, dass** sie außerdem ein Gebläse (18) sowie ein Reduzierstück (36) umfasst, das zwischen einem der Verdichter (24, 26) und dem Gebläse (18) angeordnet ist.

12. Verwendung eines transsonischen Verdichters (24) nach einem der Ansprüche 1 bis 9 oder einer Turbomaschine (2) nach Anspruch 10 oder 11, wobei die Rotorschaufeln (40, 42, 44) so angetrieben werden, dass sie sich mit einer solchen Geschwindigkeit (w) drehen, dass sich ihre radial äußeren Enden mit einer Geschwindigkeit (U) zwischen 360 m/s und 420 m/s bewegen, wobei vorzugsweise die zwei oder drei Reihen von Rotorschaufeln (40, 42, 44) eine stromaufwärts gelegene Reihe (40) und eine stromabwärts gelegene Reihe (44) umfassen und die Belastung der stromaufwärts gelegenen Reihe (40) mindestens 1,4 größer ist als die Belastung der stromabwärts gelegenen Reihe (44).

## Claims

1. Transonic compressor (24) of an aircraft turbomachine (2) comprising exactly two or exactly three annular rows of rotor blades (40, 42, 44) and respectively exactly one or exactly two annular row(s) of intermediate stator vanes (41, 43), interposed between two successive rows of rotor blades (40, 42, 44), wherein when the rotor blades (40, 42, 44) are driven at a rotational speed (ω) such that the velocity (U) of the radially outer end of the rotor blades (40, 42, 44) is between 360 m/s and 420 m/s, the angle of the outlet airflow (41. 2, 43.2) of the intermediate stator vanes (41, 43) of the single annular row of stator vanes or of at least one of the two annular rows of stator vanes, in particular the more upstream one, is on average greater than 15° along the entire height (H) of these blades (41, 43) and is greater than 15°, preferably greater than 20°, over a radial portion (H7) of these stator vanes that is comprised between 60% and 80% of the radial height of these stator vanes (41, 43).

2. Compressor (24) according to claim 1, **characterized in that** it comprises an annular row of downstream stator vanes (45), downstream of the most downstream annular row of rotor blades (44), the difference (Δ45) between the angle of the inlet air flow (45.1) and the angle of the airflow at the outlet (45.2) of these vanes being less than 40° over a radial portion (H9) extending from 10% to 90% of their radial height, and less than 50° over the radial portions (H8, H10) below 10% and above 90% of their radial height.

3. Compressor (24) according to any of claims 1 or 2, **characterized in that** the two or three rows of rotor blades (40, 42, 44) are two rows of rotor blades (40, 44) comprising an upstream blade row (40) and a downstream blade row (44), the average (<Δ40>) of the difference (Δ40) between the angles of the inlet (40. 1) and at the outlet (40.2) over the entire height (H) of the upstream blades (40) being greater than or equal to 1.4 times, preferably greater than or equal to 1.5 times, the average (<Δ44>) of the difference (<Δ44>) between the angles of the inlet (44.1) and outlet (44.2) flow over the entire height (H) of the downstream blades (44).

4. Compressor (24) according to any of claims 1 or 2, **characterized in that** the two or three rows of rotor blades (40, 42, 44) are three rows of rotor blades (40, 42, 44) comprising an upstream blade row (40) and an intermediate blade row (42), the average (<Δ40>) of the difference (Δ40) between the angles of the inlet flow (40.1) and outlet (40.2) over the entire height (H) of the upstream blades (40) being greater than or equal to 1.2 times the average (<Δ42>) of the difference (Δ42) between the inlet (42.1) and outlet (42.2) flow angles over the entire height (H) of the intermediate blades (42).

5. Compressor (24) according to the preceding claim, **characterized in that** the three rows (40, 42, 44) further comprise a row of downstream blades (44), the average (<Δ42>) of the difference (<Δ42>) between the angles of the inlet flow (42. 1) and outlet (42.2) over the entire height (H) of the upstream blades (40) being greater than or equal to 1.4 times the average (<Δ44>) of the difference (Δ44) between the inlet (44.1) and outlet (44.2) flow angles over the entire height (H) of the downstream blades (44).

6. Compressor (24) according to one of claims 1 to 5, **characterized in that** the velocity (W3, W5) of the flow relative to the rotor (42, 44) that it encounters at the outlet of the intermediate stator rows (41, 43) is less than or equal to a Mach number of 0.9 on a radial portion (H3) of the rotor blades (42, 44) extending over the radially inner 40% of the blades (42, 44), and less than or equal to a Mach number of 1 on a radial portion (H4) extending over the radially inner 80% of the blades (42, 44), and less than or equal to a Mach number of 1.05 on a radial portion (H5) extending over the radially outer 20% of these blades (42, 44).

7. Compressor (24) according to one of claims 1 to 6, **characterized in that** the direction of the flow at the outlet of the rotor rows (40, 42, 44) is inclined by more than 40°, preferably is inclined by 45° to 50° on average over the height (H) of the blades (40, 42, 44), with respect to the axis of rotation (4) of the blades (40, 42, 44).

8. Compressor (24) according to one of the claims 1 to 7, **characterized in that** the speed (V2) at the outlet of the most upstream rotor blades (40) is lower than a Mach number of 0.8.

9. Compressor (24) of any one of claims 1 to 8, **characterised in that** the two or three rows of rotor blades (40, 42, 44) comprise an upstream-most row (40) and a downstream-most row (44), and the enthalpy change between the outlet and inlet of the blades in the upstream-most row (40) is at least 1.4 greater than the enthalpy change between the outlet and inlet of the blades in the downstream-most row (44).

10. A turbomachine (2) comprising a low-pressure compressor (24), a high-pressure compressor (26), a structural casing (47) upstream of the low-pressure compressor (24) and an intermediate structural casing (49) between the low-pressure compressor (24) and the high-pressure compressor (26), the structural casings (47, 49) delimiting a swan-neck-shaped air stream (8), **characterized in that** the low-pressure compressor (24) conforms to any of the preceding claims and is arranged directly downstream of the upstream casing (47) and directly upstream of the intermediate casing (49).

11. Turbomachine (2) according to claim 10, **characterized in that** it further comprises a fan (18) as well as a gearbox (36) arranged between either of the compressors (24, 26) and the fan (18).

12. Use of a transonic compressor (24) according to any one of claims 1 to 9 or of a turbomachine (2) according to claim 10 or 11, the rotor blades (40, 42, 44) rotating at a speed (ω) such that their radially outer ends move at a speed (U) between 360 m/s and 420 m/s, wherein preferably the two or three rows of rotor blades (40, 42, 44) comprise an upstream-most row (40) and a downstream-most row (44), and the load on the upstream-most row (40) is at least 1.4 greater than the load on the downstream-most row (44).
